# EUROPÄISCHE PATENTSCHRIFT

(11) **EP 0 330 759 B1**
(45) Veröffentlichungstag und Bekanntmachung des Hinweises auf die Patenterteilung: **21.07.1993**
(21) Anmeldenummer: 88121463.9
(22) Anmeldetag: 22.12.1988
(51) Int. Cl.: B60J 5/04

(54) **Biegeträger für Türaufprallprofile, Stossfänger, Karosserie-versteifungen o.dgl.**
Bending beam for a door-stiffening rib, bumper, stiffening rib for a superstructure or the like
Poutre de flexion pour nervure de renfort de porte, pare-chocs, nervure de renfort de carrosserie ou de la sorte

(30) Priorität: 02.03.1988 DE 3806724
(43) Veröffentlichungstag der Anmeldung: 06.09.1989
(73) Patentinhaber: VAW Aluminium AG, D-53117 Bonn (DE)
(72) Erfinder: Von Zengen, Karl-Heinz, Dipl.-Ing., D-5300 Bonn 1 (DE); Bures, Wolfgang, D-5205 St. Augustin 2 (DE); Söllner, Gerhardt, Dipl.-Ing., D-5205 St. Augustin (DE)
(74) Vertreter: Müller-Wolff, Thomas, Dipl.-Ing.

(56) Entgegenhaltungen:
- FR-A- 2 161 174
- FR-A- 2 207 039
- US-A- 4 090 734

## Beschreibung

Die Erfindung betrifft einen Biegeträger für Türaufprallprofile, Stoßfänger, Karosserieverrsteifungen o. dgl., bestehend aus einem Hohlprofil mit einer ebenen Kraftangriffsfläche und mit mindestenszwei gegenüberliegenden planparallelen Verformungsflächen, die senkrecht zur Kraftangriffsfläche angeordnet sind.

Ein Biegeträger der eingangs genannten Art ist aus der DE-OS 36 06 024 (Aluminium Walzwerke Singen) bekannt. Dabei schließen die Profilwände mit einem Paar sie verbindende Querwände eine Profilkammer ein, wobei die Profilwände über die Außenflächen der Querwände unter Bildung von Wulstabschnitten hinauskragen.

Die Auslegung des bekannten Biegeträgers erfolgt nach der maximal aufzunehmenden Kraft, die den Querschnitt der Profilkammer über die gesamte Länge bestimmt. Das Kraft-Weg-Diagramm ist über den gesamten Biegeträger hin konstant (s. Fig. 11 der DE-OS 36 06 024).

Die Kraft-Weg-Diagramme werden üblicherweise nach den Vorschriften des Federal Motor Vehicle Safety Standard Nr. 214 (FMVSS) durchgeführt. Dabei ist der Kraftangriffspunkt und die Druckrichtung eines halbkugeligen Druckkörpers und der Stempelweg des Prüfkörpers vorgegeben.

Bei einem gewichtsoptimierten Biegeträger der bekannten Art müßten für jeden Belastungsfall gesonderte Profile mit entsprechend ausgebildeten Wulstabschnitten angefertigt werden. Für eine Großserienfertigung ist dies nicht geeignet und unwirtschaftlich.

Aus US-A-4,090,734 ist ein Biegeträger für Automobiltüren bekannt, der aus einem im Querschnitt gesehenen gewellten Walzprofil besteht. Aus Verstärkungsgründen kann das Wellprofil mit plattenförmigen Zusatzelementen in Kraftangriffsrichtung verschweißt werden. Der dabei entstehende Versteifungskörper ist in Kraftangriffsrichtung verbreitert, wodurch der zur Verfügung stehende Raum für weitere Einbauten, wie z. B. Fensterheber oder Verriegelungsgestänge, sich verkleinert. Für viele Einsatzfälle ist daher die Einbauhöhe dieses bekannten Biegeträgers zu groß.

Aufgabe der vorliegenden Erfindung ist es, einen gewichtsoptimierten Biegeträger für Türaufprallprofile, Stoßfänger, Karosserieversteifungen o. dgl. zu entwickeln, der bei vorgegebener Einbauhöhe h in Kraftangriffsrichtung ein Maximum an Biegesteifigkeit bei möglichst geringem Gewicht aufweist, als Großserienteil herstellbar und durch geringfügige Änderung an verschiedene Belastungsfälle anpaßbar ist.

Die Aufgabe wird durch die in den Schutzansprüche angegebenen Merkmale gelöst. Es hat sich gezeigt, daß durch seitliche Aussteifungen senkrecht zur Kraftangriffsrichtung eine optimale Anpassung an das jeweils vorgegebene Kraft-Weg-Diagramm erfolgt. Die Profile sind so ausgebildet, daß die Hauptmasse des Profils in der Außenphase der Y-Achse liegt.

Die Aussteifungen können seitlich beidseitig symmetrisch und nicht symmetrisch zur Kraftangriffsrichtung sein, entsprechend den Anforderungen der Biegebeanspruchung. Sie werden vorzugsweise bei einem Aluminiumstrangpreßprofil formschlüssig und kraft-schlüssig durch geeignetes Fügen mit dem Biegeträger verbunden. Es ist besonders vorteilhaft, wenn das Zusatzprofil zur Erhöhung des E-Moduls des Biegträgers mit einer Faserverstärkung ausgerüstet ist. Als Aussteifungen können auch partikelverstärkte Strangpreßprofile verwendet werden, die dispersionsgehärtet sind.

Im folgenden wird die Erfindung anhand mehrerer Ausführungsbeispiele näher erläutert. Es zeigen:
- Fig. 1 =: Querschnitt durch einen erfindungsgemäßen Biegeträger
- Fig. 2 =: Perspektivische Längsansicht durch einen erfindungsgemäßen Biegeträger

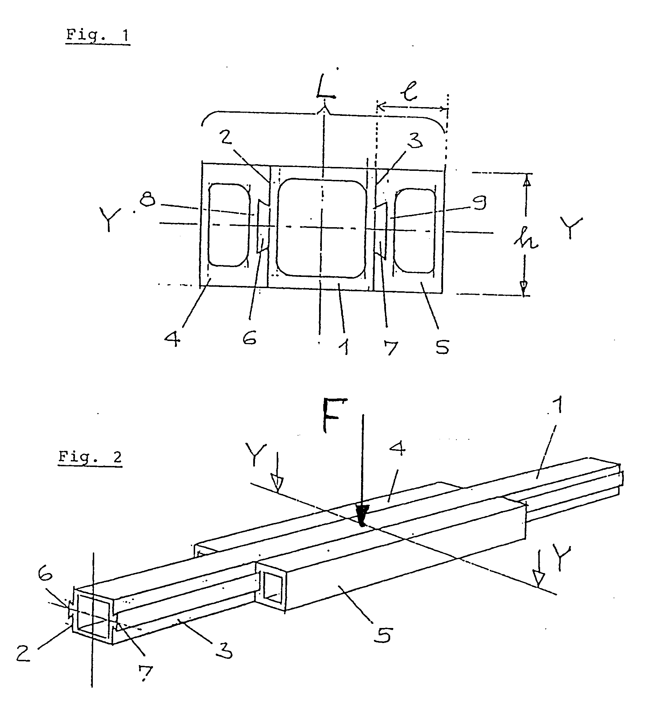

In Fig. 1 ist der Biegeträger 1 mit Verformungsflächen 2, 3 dargestellt, die zusätzlich je einen Schwalbenschwanz 6, 7 aufweisen. Über die Schwalbenschwänze sind Zusatzprofile 4, 5 mittels Schwalbenschwanznuten 8, 9 formschlüssig verbunden.

Die Länge L bezeichnet die Gesamtbreite aus Zusatzprofilen 4, 5 und Biegeträger 1 quer zur Kraftangriffsrichtung. Die Höhe h bezeichnet die Dicke des Biegeträgers bzw. der Zusatzprofile in Kraftangriffsrichtung.

In Fig. 2 ist der Biegeträger 1 mit Zusatzprofilen 4, 5 dargestellt, die nicht über die gesamte Länge des Biegeträgers 1 gehen. Die Zusatzprofile 4, 5 sind an den Schwalbenschwänzen 6, 7 formschlüssig befestigt, die wiederum auf den Verformungsflächen 2, 3 des Biegeträgers 1 angeordnet sind. Die wesentliche Erkenntnis der vorliegenden Erfindung besteht darin, daß die Aussteifungen (also die Zusatzprofile 4, 5) an den jeweiligen Belastungsfall durch Veränderung der Seitenlänge angepaßt werden kann. Dadurch können die Biegeträger mit Schwalbenschwanznuten oder Schwalbenschwänzen als Großserienteil hergestellt werden und mit verschieden langen Zusatzprofilen kombiniert werden. Die formschlüssige Verbindung sorgt dabei für eine vollständige Übertragung der Biegekräfte.

Es ist auch möglich, die Zusatzprofile unsymmetrisch über den Biegeträger anzuordnen. Dies geschieht durch Verschieben der Zusatzprofile in der Schwalbenschwanzverbindung.

## Patentansprüche

1. Biegeträger für Türaufprallprofile, Stoßfänger, Karosserieversteifungen o. dgl., bestehend aus einem Hohlprofil mit einer ebenen Kraftangriffsfäche und mit mindestens zwei gegenüberliegenden planparallelen Verformungsflächen, die senkrecht zur Kraftangriffsfläche angeordnet sind, dadurch gekennzeichnet, daß die Verformungsfläche (2, 3) des Biegeträgers (1) form- und/oder kraftschlüssig mit mindestens einem Zusatzprofil (4, 5) verbunden sind, wobei die Mitte der Länge des Zusatzprofils oder der Zusatzprofile in etwa mit dem Kraftangriffspunkt übereinstimmt und die Enden sich bis zu einem Punkt erstrecken, in dem mindestens zwei Drittel des Biegemomentes abgebaut sind.

2. Biegeträger nach Anspruch 1, dadurch gekennzeichnet, daß an der Berührungsstelle zwischen Verformungsflächen (2, 3) und Zusatzprofil (4, 5) eine Schwalbenschwanzverbindung vorhanden ist.

3. Biegeträger nach Anspruch 1 oder 2, dadurch gekennzeichnet, daß in der Verformungsfläche (2, 3) ein Schwalbenschwanz (6,7) und in den Zusatzprofilen (4, 5) eine Schwalbenschwanznut (8, 9) eingeformt ist.

4. Biegeträger nach einem der vorhergehenden Ansprüche, dadurch gekennzeichnet, daß das Zusatzprofil ein Hohlprofil ist.

5. Biegeträger nach einem der vorhergehenden Ansprüche, dadurch gekennzeichnet, daß die Gesamtlänge L aus Biegeträger (1) und Zusatzprofilen (4, 5) quer zur Kraftangriffsrichtung mindestens doppelt so groß ist wie die Höhe h des Biegeträgers und der Zusatzprofile in Kraftangriffsrichtung.

6. Biegeträger nach einem der vorhergehenden Ansprüche, dadurch gekennzeichnet, daß das Zusatzprofil ein Hohlprofil mit rechteckförmigem Querschnitt ist, wobei das Verhältnis der Länge l zu der Höhe h wie 1:2 ist.

7. Biegeträger nach einem der vorhergehenden Ansprüche, dadurch gekennzeichnet, daß die Zusatzprofile (4, 5) aus einem faserverstärkten Aluminiumstrangpreßprofil bestehen, wobei der Faserverlauf in Profillängsrichtung ausgerichtet ist.

8. Biegeträger nach einem der vorhergehenden Ansprüche, dadurch gekennzeichnet, daß die Zusatzprofile aus einem dispersionsgehärteten Aluminiumstrangpreßprofil bestehen.

## Claims

1. A bending beam for door impact profiles, bumpers, car body reinforcements or the like, comprising a hollow profile with a flat force application surface and at least two oppositely arranged plane-parallel deforming surfaces, which are arranged perpendicular to the force application surface, characterised in that the deforming surfaces (2, 3) of the bending beam (1) are connected by positive- and/or force-locking with at least one additional profile (4, 5), the centre of the length of the additional profile or profiles approximately coinciding with the force application point and the ends extending up to a point at which at least two thirds of the bending moment has been dissipated.

2. A bending beam according to claim 1, characterised in that a dovetail joint is provided at the point of contact between the deforming surfaces (2, 3) and the additional profile (4, 5).

3. A bending beam according to claim 1 or 2, characterised in that a dovetail (6, 7) is formed in the deforming surface (2, 3) and a dovetailed groove (8, 9) is formed in the additional profiles (4, 5).

4. A bending beam according to one of the preceding claims, characterised in that the additional profile is a hollow profile.

5. A bending beam according to one of the preceding claims, characterised in that the overall length L of bending beam (1) and additional profiles (4, 5), measured transversely to the force application direction, is at least twice the height h of the bending beam and the additional profiles in the force application direction.

6. A bending beam according to one of the preceding claims, characterised in that the additional profile is a hollow profile with a rectangular cross-section, the ratio of length l to height h being 1 : 2, for example.

7. A bending beam according to one of the preceding claims, characterised in that the additional profiles (4, 5) are made of a fibre-reinforced extruded aluminium profile, the direction of the fibres corresponding to the longitudinal direction of the profile.

8. A bending beam according to one of the preceding claims, characterised in that the additional profiles are made of a dispersion-hardened extruded aluminium profile.

## Revendications

1. Poutre de flexion pour profilés de renforts de portes anti-collision, pare-chocs, raidisseurs de carrosseries ou équivalents, composée d'un profilé creux qui possède une surface plane d'application de la force et au moins deux surfaces de déformation planes parallèles, mutuellement opposées, qui sont disposées perpendiculairement à la surface d'application de la force, caractérisée en ce que les surfaces de déformation (2, 3) de la poutre de flexion (1) sont assemblées par une liaison opérant par sûreté de forme et/ou par action de force, à au moins un profilé additionnel (4, 5), le milieu de la longueur du prof ilé additionnel ou des profilés additionnels coïncidant à peu près avec le point d'application de la force et les extrémité s'étendant jusqu'à un point où au moins les deux tiers du moment fléchissant sont absorbés.

2. Poutre de flexion selon la revendication 1, caractérisée en ce que dans la zone de contact entre les surfaces de déformation (2, 3) et le profilé additionnel (4, 5), est prévu un assemblage à queue d'aronde.

3. Poutre de flexion selon la revendication 1 ou 2, caractérisé en ce qu'une queue d'aronde (6, 7) est formée dans la surface de déformation (2, 3) et une rainure à queue d'aronde (8, 9) est formée dans les profilés additionnels (4, 5).

4. Poutre de flexion selon une des revendications précédentes, caractérisée en ce que le profilé additionnel est un profilé creux.

5. Poutre de flexion selon une des revendications précédentes, caractérisée en ce que la longueur totale L, composée de la poutre de flexion (1) et des profilés additionnels (4, 5), mesurée transversalement à la direction d'application de la force, est au moins le double de la hauteur h de la poutre de flexion et des profilés additionnels, mesurée dans la direction d'application de la force.

6. Poutre de flexion selon une des revendications précédentes, caractérisée en ce que le profité additionnel est un profité creux de section transversale rectangulaire, le rapport de la longueur l à la hauteur h étant de 1:2.

7. Poutre de flexion selon une des revendications précédentes, caractérisée en ce que les profilés additionnels (4, 5) sont composés d'un profilé en aluminium filé à la presse renforcé de fibres, la direction des fibres étant orientée dans la direction longitudinale du profilé.

8. Poutre de flexion selon une des revendications précédentes, caractérisée en ce que les profilés additionnels sont composés d'un profité d'aluminium filé à la presse durci en dispersion.
